# EUROPEAN PATENT SPECIFICATION

(11) **EP 1 873 194 B1**
(45) Date of publication and mention of the grant of the patent: **18.05.2016**
(21) Application number: 06730520.1
(22) Date of filing: 29.03.2006
(51) Int. Cl.: C08J 9/28, B29C 55/00, B01D 67/00

(54) **METHOD FOR PRODUCING POLYOLEFIN MICROPOROUS FILM AND MICROPOROUS FILM**
VERFAHREN ZUR HERSTELLUNG EINER MIKROPORÖSEN POLYOLEFINFOLIE UND MIKROPORÖSE FOLIE
PROCEDE DE PRODUCTION D' UN FILM MICROPOREUX POLYOLEFINIQUE ET FILM MICROPOREUX

(30) Priority: 31.03.2005 JP 2005103862
(43) Date of publication of application: 02.01.2008
(73) Proprietor: Toray Battery Separator Film Co., Ltd., Tochigi (JP)
(72) Inventor: TAKITA, Kotaro, Nasushiobara-shi Tochigi 3292735 (JP); KIMISHIMA, Kotaro, Yokohama-shi Kanagawa 2350022 (JP); KONO, Koichi, Asaka-shi Saitama 3510025 (JP)
(74) Representative: Strehl Schübel-Hopf & Partner
(86) International application number: PCT/JP2006/306572
(87) International publication number: WO 2006/106786

(56) References cited:
- EP-A1- 1 153 969
- EP-A1- 1 870 430
- EP-A1- 1 873 193
- EP-A1- 1 897 903
- EP-A1- 1 905 586
- EP-A1- 1 932 875
- EP-A1- 1 942 000
- EP-A1- 1 946 905
- JP-A- 06 240 036
- JP-A- 06 240 036
- JP-A- 11 060 789
- JP-A- 11 060 789
- JP-A- 2003 105 121
- JP-A- 2003 105 121

## Description

### FIELD OF THE INVENTION

The present invention relates to a method for producing a microporous polyolefin membrane having a large pore diameter, excellent air permeability, mechanical strength and compression resistance usable for battery separators and various filters, and a microporous membrane produced thereby.

### BACKGROUND OF THE INVENTION

Microporous polyethylene (PE) membranes are used for various applications such as battery separators, diaphragms for electrolytic capacitors, various filters, water-vapor-permeable and waterproof clothing materials, reverse osmosis filtration membranes, ultra filtration membranes, micro filtration membranes, etc. When microporous PE membrane is used for battery separators, particularly a lithium ion battery separator, its performance largely affects the properties, productivity and safety of batteries. Accordingly, the microporous polyethylene membrane is required to have excellent permeability, mechanical properties, heat shrinkage resistance, shutdown properties, meltdown properties, etc.

As a method for improving the properties of microporous PE membranes, a method for optimizing material compositions, stretching temperatures, stretching magnifications, heat treatment conditions, etc. has been proposed. As a method for producing a microporous polyolefin (PO) membrane having excellent permeability and a sharp pore diameter distribution, the applicant proposed, in JP 10-279719 A, for instance, a method comprising the steps of (1) extruding through a die a solution comprising 5 to 40% by mass of a PO composition having ultra-high-molecular-weight PO having a weight-average molecular weight (Mw) of 5 x 10⁵ or more, and 95 to 60% by mass of a membrane-forming solvent, (2) rapidly cooling the extrudate to form a sheet, and (3) stretching the sheet to 1.01 to 1.4 fold in area magnification.

As a method for producing a microporous PO membrane having excellent permeability and a large pore diameter, the applicant further proposed, in WO 1999/21914, a method comprising the steps of (1) preparing a PO solution comprising 5 to 40% by mass of (a) PO having Mw of 3 x 10⁵ or more and less than 1 x 10⁶ and a molecular weight distribution (weight-average molecular weight/number-average molecular weight) of 5 to 300, or (b) a PO composition having Mw of 3 x 10⁵ to 1 x 10⁶ and a molecular weight distribution of 5 to 300 as a whole, and 95 to 60% by mass of a membrane-forming solvent, (2) extruding the resultant PO solution, (3) stretching the extruded PO solution uniaxially at a draft ratio of 3 to 50 while melting, (4) cooling the stretched PO solution to a gel molding, (5) removing the remaining solvent from the resultant gel molding, (6) drying, and then (7) heat-setting it at a temperature ranging from 80°C to the melting point of PO.

As a method for producing a microporous membrane having excellent strength and permeability with no local nonuniformity, and a porous structure with a uniform surface, WO 1999/48959 discloses a method comprising the steps of (1) melt-blending (a) a PO resin (for instance, high-density polyolefin) having Mw of 50,000 or more and less than 5,000,000 (most preferably 200,000 to 500,000) and a molecular weight distribution of 1 or more and less than 30, and (b) a membrane-forming solvent, (2) extruding the resulting melt blend, (3) cooling the extrudate to form a gel molding, (4) stretching the gel molding at least uniaxially at a temperature of the melting point of PO resin -50°C or higher and lower than the melting point, (5) removing the membrane-forming solvent from the resultant stretched membrane, (6) stretching it again (to a magnification of 1.1 to 5 fold) at least uniaxially at a temperature of the melting point of PO resin -50°C or higher and lower than the melting point, and (7) heat-setting it at a temperature ranging from the crystal dispersion temperature of PO resin to the melting point.

As a method for producing a microporous PO membrane having excellent permeability and mechanical strength, which has at least one surface having large pore openings, and an inner layer having smaller pores than those on the surface, the applicant further proposed, in WO 2000/20493, a method comprising the steps of (1) extruding a solution comprising 10 to 50% by mass of PO (A) having Mw of 5 x 10⁵ or more or a composition (B) comprising the PO (A), and 50 to 90% by mass of a membrane-forming solvent, (2) removing the solvent from the resultant gel molding, the molding being brought into contact with a hot solvent before or after removing the solvent.

As a method for producing a microporous PO membrane having a proper pore diameter and high pin puncture strength, porosity and permeability, the applicant further proposed, in WO 2000/49074, a method comprising the steps of (1) melt-extruding a PO composition comprising 10 to 40% by mass of ultra-high-molecular-weight PO (A) having Mw of 500,000 or more or a composition (B) comprising the PO (A), and 90 to 60% by mass of a membrane-forming solvent, (2) cooling the resultant extrudate to form a gel molding (3) stretching the gel molding biaxially to a magnification of 5 folds or more at 110 to 120°C, (4) removing the membrane-forming solvent, (5) drying, and then (6) heat-setting it at 115 to 125°C.

As a method for producing a microporous PO membrane having well-balanced porosity, air permeability and pin puncture strength, as well as excellent heat shrinkage resistance, the applicant further proposed, in JP 2003-103625 A, a method comprising the steps of (1) melt-blending PO essentially comprising PE having Mw of 5 x 10⁵ or more, and a membrane-forming solvent (2) extruding the resulting melt blend, (3) cooling the extrudate to form a gel molding, (4) stretching the gel molding at least uniaxially, (5) removing the membrane-forming solvent from the resultant stretched membrane using a washing solvent having a surface tension of 24 mN/m or less at 25°C, (6) stretching the stretched and washed membrane again at least uniaxially at a temperature of the crystal dispersion temperature of PO or higher and lower than the melting point of PO, and then (7) heat-treating at a temperature ranging from the crystal dispersion temperature of PO to the melting point of PO.

Increasingly important recently as the properties of separators are not only permeability, mechanical strength and heat shrinkage resistance, but also properties related to battery life such as battery cyclability and properties related to battery productivity such as electrolytic solution absorption. Particularly in the case of lithium ion batteries, electrodes expand and shrink by the intrusion and departure of lithium, and their expansion ratios have become larger recently because of increase in battery capacity. The separators compressed by the expansion of the electrodes are required to suffer as little change as possible in permeability, while being so deformable as to absorb the expansion of electrodes. The microporous membrane obtained by the method described in each reference, however, has insufficient compression resistance, presumably because the re-stretching after removing the membrane-forming solvent is not conducted in JP 10-279719 A, WO 1999/21914, WO 2000/20493 and WO 2000/49074, because neither the first stretching temperature nor the second stretching magnification is optimized in WO 1999/48959, and because the re-stretching magnification is not optimized in JP 2003-103625 A. With poor compression properties, a microporous membrane used as a separator tends to provide a battery with small capacity (low cyclability).

### OBJECTS OF THE INVENTION

Accordingly, an object of the present invention is to provide a method for producing a microporous polyolefin membrane having a large pore diameter and excellent air permeability, mechanical strength and compression resistance.

Another object of the present invention is to provide such a microporous polyolefin membrane.

### DISCLOSURE OF THE INVENTION

As a result of intense research in view of the above objects, the inventors have found that a microporous polyolefin membrane having a large pore diameter and excellent air permeability, mechanical strength and compression resistance can be obtained, (a) when stretching a gel molding comprising a polyolefin and a membrane-forming solvent at least uniaxially at a temperature ranging from the crystal dispersion temperature of the polyolefin +15°C to the crystal dispersion temperature +40°C, removing the membrane-forming solvent, and then stretching it again to a magnification of 1.1 to 2.5 fold at least uniaxially, or (b) when stretching the gel molding at least uniaxially, bringing the stretched membrane into contact with a hot solvent before and/or after removing the membrane-forming solvent, and then stretching it again to a magnification of 1.1 to 2.5 fold at least uniaxially.

Thus, the first method of the present invention for producing a microporous polyolefin membrane comprises the steps of (1) melt-blending a polyolefin and a membrane-forming solvent, (2) extruding the resultant melt blend through a die, (3) cooling the resultant extrudate to form a gel molding, (4) subjecting the gel molding to a first stretching at least uniaxially, (5) removing the membrane-forming solvent, and (6) subjecting the stretched, solvent-removed membrane to a second stretching at least uniaxially, the first stretching temperature being in a range from the crystal dispersion temperature of the polyolefin +15°C to the crystal dispersion temperature +40°C, and the second stretching magnification being 1.1 to 2.5 fold.

The second method of the present invention for producing a microporous polyolefin membrane comprises the steps of (1) melt-blending a polyolefin and a membrane-forming solvent, (2) extruding the resultant melt blend through a die, (3) cooling the extrudate to form a gel molding, (4) subjecting the gel molding to a first stretching at least uniaxially, (5) removing the membrane-forming solvent, and (6) subjecting the stretched, solvent-removed membrane to a second stretching at least uniaxially, the first-stretched membrane being brought into contact with a hot solvent before and/or after removing the membrane-forming solvent, and the second stretching magnification being 1.1 to 2.5 fold.

In order to further improve permeability in the first and second methods, the second stretching temperature is preferably in a range from the crystal dispersion temperature of the polyolefin to the crystal dispersion temperature +40°C. A heat treatment is preferably conducted after the second stretching. The features of each of the first and second methods are not restricted to each method. For instance, the features of the first method are applied to the second method, and vice versa.

The microporous polyolefin membranes obtained by the first and second methods of the present invention generally have air permeability of 30 to 400 seconds/100 cm³/20 µm, porosity of 25 to 80%, average pore diameters of 0.01 to 1.0 µm, thickness change ratios of 15% or more after heat compression at 2.2 MPa and 90°C for 5 minutes, and air permeability after the heat compression of 600 seconds/100 cm³/20 µm or less.

### DESCRIPTION OF THE PREFERRED EMBODIMENTS

### [1] Polyolefin

Polyolefin (PO) may be a single PO or a composition comprising two or more POs. Though not particularly restricted, the weight-average molecular weight (Mw) of the PO is generally 1 x 10⁴ to 1 x 10⁷, preferably 1 x 10⁴ to 15 x 10⁶, more preferably 1 x 10⁵ to 5 x 10⁶.

The Pro preferably includes polyethylene (PE). The PE may include ultra-high-molecular-weight polyethylene (UHMWPE), high-density polyethylene (HDPE), middle-density polyethylene (MDPE) and low-density polyethylene (LDPE). These PEs may be not only ethylene homopolymers, but also copolymers having small amounts of other α-olefins. The other α-olefins than ethylene preferably include propylene, butene-1, hexene-1, pentene-1, 4-methylpentene-1, octene, vinyl acetate, methyl methacrylate, styrene, etc.

Though the PE may be a single PE, it is preferably a composition of two or more PEs. The PE composition may be a composition of two or more UHMWPEs having different Mws, a composition of similar HDPEs, a composition of similar MDPEs, or a composition of similar LDPEs, and it may be a composition comprising two or more PEs selected from the group consisting of UHMWPE, HDPE, MDPE and LDPE.

The PE composition is preferably composed of a UHMWPE having Mw of 5 x 10⁵ or more and a PE having Mw of 1 x 10⁴ or more and less than 5 x 10⁵. The Mw of the UHMWPE is preferably 5 x 10⁵ to 1 x 10⁷, more preferably 1 x 10⁶ to 15 x 10⁶, most preferably 1 x 10⁶ to 5 x 10⁶. The PE having Mw of 1 x 10⁴ or more and less than 5 x 10⁵ may be any of HDPE, MDPE and LDPE, though HDPE is preferable. The PE having Mw of 1 x 10⁴ or more and less than 5 x 10⁵ may be composed of two or more PEs having different Mws, or two or more PEs having different densities. With the upper limit of Mw of 15 x 10⁶, the PE composition is easily melt-extruded. The percentage of the UHMWPE in the PE composition is preferably 1% or more by mass, more preferably 10 to 80% by mass, based on 100% by mass of the entire PE composition.

Though not particularly restricted, the ratio of Mw/Mn (molecular weight distribution) of the PO, wherein Mn represents a number-average molecular weight, is preferably 5 to 300, more preferably 10 to 100. When the Mw/Mn is less than 5, the percentage of a high-molecular-weight component is too high to melt-extrude the PO solution easily. When the Mw/Mn is more than 300, the percentage of a low-molecular-weight component is too high, resulting in decrease in the strength of the microporous PO membrane. The Mw/Mn is used as a measure of a molecular weight distribution; the larger this value, the wider the molecular weight distribution. That is, the Mw/Mn of a single PO indicates its molecular weight distribution; the larger the value, the wider its molecular weight distribution. The Mw/Mn of a single PO can be properly controlled by a multi-stage polymerization. The multi-stage polymerization method is preferably a two-stage polymerization method comprising forming a high-molecular-weight polymer component in the first stage and forming a low-molecular-weight polymer component in the second stage. When the PO is a composition, a larger Mw/Mn means a larger difference of Mw between its components, and a smaller Mw/Mn means a smaller difference of Mw between them. The Mw/Mn of a PO composition can be properly controlled by adjusting the molecular weights and/or percentages of the components.

When the microporous PO membrane is used for a battery separator, the PO may contain polypropylene (PP) in addition to PE to raise the meltdown temperature of the separator and to improve the high-temperature-reserve-properties of the battery. The Mw of the PP is preferably 1 x 10⁴ to 4 x 10⁶. The PP may be a homopolymer, or a block copolymer and/or a random copolymer having the other α-olefin. The other α-olefin is preferably ethylene. The additional amount of PP is preferably 80% or less by mass based on 100% by mass of the entire PO composition (PE + PP).

To improve properties needed when used for battery separators, the PO may contain a PO component capable of imparting a shutdown function to a separators. Such shutdown-function-imparting Pro component may be, for instance, LDPE. LDPE is preferably at least one selected from the group consisting of branched LDPE, linear LDPE (LLDPE), ethylene/α-olefin copolymer produced using a single-site catalyst, and low-molecular-weight PE having Mw of 1 x 10³ to 4 x 10³. The amount of the shutdown-function-imparting PO added is preferably 20% or less by mass based on 100% by mass of the entire PO. The addition of too much shutdown-function-imparting PO highly likely causes the rupture of the microporous PO membrane when stretched.

At least one optional component selected from the group consisting of polybutene-1 having Mw of 1 x 10⁴ to 4 x 10⁶, PE wax having Mw of 1 x 10³ to 4 x 10⁴ and ethylene/α-olefin copolymer having Mw of 1 x 10⁴ to 4 x 10⁶ may be added to a PE composition comprising the above UHMWPE. The amount of these optional components added is preferably 20% or less by mass based on 100% by mass of the entire PO composition.

### [2] Production method of microporous polyolefin membrane

The first and second production methods of the present invention will be explained in detail as follows. It should be noted that the features of each method can be applied to the other.

### (A) First production method

The first method of the present invention for producing a microporous PO membrane comprises the steps of (1) adding a membrane-forming solvent to the above PO, and melt-blending the PO and the membrane-forming solvent to prepare a PO solution, (2) extruding the PO solution through a die lip and cooling the extrudate to form a gel molding, (3) subjecting the gel molding to a first stretching at least uniaxially at a temperature ranging from the crystal dispersion temperature of the polyolefin +15°C to the crystal dispersion temperature +40°C, (4) removing the membrane-forming solvent, (5) drying the resultant membrane, and (6) subjecting the dried membrane to a second stretching to a magnification of 1.1 to 2.5 fold at least uniaxially. If necessary, the method may further comprise a heat treatment step (7), a cross-linking step with ionizing radiations (8), a hydrophilizing step (9), a surface-coating step (10), etc., after the steps (1) to (6).

### (1) Preparation of polyolefin solution

PO is melt-blended with a proper membrane-forming solvent to prepare a PO solution. The PO solution, if necessary, may contain various additives such as antioxidants, ultraviolet absorbents, antiblocking agents, pigments, dyes, inorganic fillers, etc. in ranges not deteriorating the effects of the present invention. A fine silicate powder, for instance, may be added as a pore-forming agent.

The membrane-forming solvent may be liquid or solid. The liquid solvents may be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel molding having a stable liquid solvent content, non-volatile liquid solvents such as liquid paraffin are preferable. The solid solvent preferably has boiling point of 80°C or lower. Such a solid solvent is paraffin wax, ceryl alcohol, stearyl alcohol, dicyclohexyl phthalate, etc. The liquid solvent and the solid solvent may be used in combination.

The viscosity of the liquid solvent is preferably 30 to 500 cSt, more preferably 50 to 200 cSt, at 25°C. When the viscosity is less than 30 cSt, the PO solution is unevenly extruded through a die lip, resulting in difficulty in blending. The viscosity of more than 500 cSt makes the removal of the liquid solvent difficult.

Though not particularly restricted, the melt-blending method preferably comprises even melt-blending in an extruder. This method is suitable for preparing a high-concentration PO solution. The melt-blending temperature of the PO is preferably in a range of the melting point of PO +10°C to +100°C. Specifically, the melt-blending temperature is preferably 140 to 250°C, more preferably 170 to 240°C. The melting point is measured by differential scanning calorimetry (DSC) according to JIS K7121. The membrane-forming solvent may be added before blending, or charged into the extruder during blending, though the latter is preferable. In the melt-blending, an antioxidant is preferably added to prevent the oxidization of PO.

In the PO solution, the percentage of PO is 1 to 50% by mass, preferably 20 to 40% by mass, based on 100% by mass of the total amount of PO and the membrane-forming solvent. Less than 1% by mass of PO causes large swelling and neck-in at the die exit during extruding, resulting in decrease in the formability and self-supportability of the gel molding. More than 50% by mass of PO deteriorates the formability of the gel molding.

### (2) Formation of gel molding

The melt-blended PO solution is extruded through the die of the extruder directly or through a die of another extruder. Alternatively, the melt-blended PO solution may be pelletized and then re-extruded through a die of another extruder. The die lip is generally a sheet-forming die lip having a rectangular mouth-shape, but may be a hollow die lip having a double-tube shape, an inflation die lip, etc. The sheet-forming die lip generally has a gap of 0.1 to 5 mm. The sheet-forming die lip is generally heated at 140 to 250°C when extruding. The extrusion speed of the heated solution is preferably 0.2 to 15 m/minute.

The solution thus extruded through the die lip is cooled to form a gel molding. Cooling is preferably conducted at a rate of 50°C/minute or more until reaching a gelation temperature. Such cooling sets a structure in which the PO phase is micro-phase-separated by the membrane-forming solvent, namely a gel structure of the PO phase and the membrane-forming solvent phase. Cooling is preferably conducted to 25°C or lower. The slower cooling rate generally leads to larger pseudo-cell units, resulting in a coarser higher-order structure of the resultant gel molding. On the other hand, the higher cooling rate leads to denser cell units. The cooling rate less than 50°C/minute causes increase in crystallinity, making it unlikely to provide the gel molding with suitable stretchability. Usable as the cooling method are a method of bringing the extrudate into contact with a cooling medium such as cooling air, cooling water, etc., a method of bringing the extrudate into contact with a cooling roll, etc.

### (3) First stretching

The resultant gel molding in a sheet form is stretched at least uniaxially. The stretching causes cleavage between PO crystal lamellas, making the PO phases finer and forming a large number of fibrils. The fibrils form a three-dimensional network structure (an irregularly, three-dimensionally combined network structure). The gel molding can be evenly stretched because it contains the membrane-forming solvent. The first stretching of the gel molding may be conducted after heated to a predetermined magnification by a typical tenter method, a roll method, an inflation method, a rolling method or a combination thereof. The first stretching may be uniaxial or biaxial, though is preferably biaxial. The biaxial stretching may be simultaneous biaxial stretching or sequential stretching, though the simultaneous biaxial stretching is preferable.

Though the stretching magnification varies according to the thickness of the gel molding, it is preferably 2 folds or more, more preferably 3 to 30 fold in the case of uniaxial stretching. In order to improve the pin puncture strength, the magnification of biaxial stretching is preferably 3 folds or more in any direction, namely 9 folds in area magnification. When the area magnification is less than 9 folds, the stretching is so insufficient to obtain a high-elastic and high-strength microporous PO membrane. When the area magnification is more than 400 folds, restrictions occur on stretching apparatuses, stretching operations, etc.

The first stretching temperature is in a range from the crystal dispersion temperature of PO +15°C to the crystal dispersion temperature +40°C. This stretching temperature is preferably from the crystal dispersion temperature +15°C to the crystal dispersion temperature +35°C, more preferably from the crystal dispersion temperature +15°C to the crystal dispersion temperature +30°C. When the stretching temperature is higher than the crystal dispersion temperature +40°C, molecular chains have low orientation after stretching. The stretching temperature of lower than the crystal dispersion temperature +15°C does not provide fibrils with leaf-vein-like structures, resulting in a small pore diameter and low compression resistance. The crystal dispersion temperature is determined by measuring the temperature characteristics of dynamic viscoelasticity according to ASTM D 4065. The crystal dispersion temperature of PE is generally 90 to 100°C. When the PO is composed of PE, therefore, the stretching temperature is generally 105 to 140°C, preferably 110 to 130°C, more preferably 115 to 125°C.

The above-mentioned first stretching provides the resultant fibrils with leaf-vein-like structures, and makes fiber trunks of fibrils relatively thick. Therefore, the subsequent removal of the membrane-forming solvent provides the microporous membrane with a large pore diameter as well as excellent strength and permeability. The team "fibrils with leaf-vein-like structures" means fibrils made of fibers having thick trunks and thin fibers extending therefrom in a complicated network structure.

Depending on the desired properties, the gel molding in a sheet form may be stretched with a temperature distribution in a thickness direction to provide the resultant microporous PO membrane with further improved mechanical strength. Usable for this stretching, for instance, is a method disclosed by JP 7-188440 A.

### (4) Removal of membrane-forming solvent

The membrane-forming solvent is removed (washed away) using a washing solvent. Because the PO phase is separated from the membrane-forming solvent, the microporous membrane is obtained by removing of the membrane-forming solvent. The washing solvents may be well-known solvents, for instance, chlorinated hydrocarbons such as methylene chloride, carbon tetrachloride, etc.; hydrocarbons such as pentane, hexane, heptane, etc.; fluorohydrocarbons such as trifluoroethane, etc.; ethers such as diethyl ether, dioxane, etc.; volatile solvents such as methyl ethyl ketone. Further usable is a washing solvent having a surface tension of 24 mN/m or less at 25°C described by JP2002-256099A. When a washing solvent having such a surface tension is removed by drying, the shrinkage of the network structure is less likely to occur by tensions in gas-liquid interfaces inside pores. As a result, the microporous membrane is provided with further improved porosity and permeability.

The heat-set membrane can be washed by immersion in the washing solvent and/or the showering of the washing solvent. The washing solvent used is preferably 300 to 30,000 parts by mass per 100 parts by mass of the membrane. The washing temperature is usually 15 to 30°C, and the membrane may be heated, if necessary, during washing. The heat-washing temperature is preferably 80°C or lower. The membrane is preferably washed until the amount of the remaining membrane-forming solvent becomes less than 1% by mass of that added.

### (5) Drying of membrane

The membrane obtained by stretching the gel molding and removing the membrane-forming solvent may be then dried by a heat-drying method, a wind-drying method, etc. The drying temperature is preferably equal to or lower than the crystal dispersion temperature of PO, more particularly 5°C or more lower than the crystal dispersion temperature.

The percentage of the remaining washing solvent in the microporous membrane after drying is preferably 5% or less by mass, more preferably 3% or less by mass, based on 100% by mass of the dried membrane. When drying is so insufficient that a large amount of the washing solvent remains in the membrane, the porosity of the membrane is lowered by subsequent second stretching and heat treatment, resulting in deteriorated permeability.

### (6) Second stretching

The dried membrane is re-stretched at least uniaxially. The second stretching may be conducted by a tenter method, etc. like the first stretching while heating the membrane. The second stretching may be uniaxial or biaxial. The biaxial stretching may be any one of simultaneous biaxial stretching and sequential stretching, though the simultaneous biaxial stretching is preferable.

The second stretching magnification in the stretching direction is 1.1 to 2.5 fold. The magnification of the uniaxial stretching, for instance, is 1.1 to 2.5 fold in a longitudinal direction (a machine direction; MD) or a transversal direction (a width direction; TD). The magnifications of the biaxial stretching are 1.1 to 2.5 fold in MD and TD, respectively. The magnifications of the biaxial stretching may be the same or different in MD and TD as long as the magnifications in both of MD and TD are within 1.1 to 2.5 fold, though the same magnification is preferable. When the magnification is less than 1.1 folds, the compression resistance is insufficient. When the magnification is more than 2.5 folds, the membrane tends to be easily broken and have low heat shrinkage resistance. The stretching magnification is more preferably 1.1 to 2 fold.

The second stretching temperature is preferably in a range from the crystal dispersion temperature of PO forming the microporous membrane to the crystal dispersion temperature +40°C, more preferably from the crystal dispersion temperature +10°C to the crystal dispersion temperature +40°C. When the second stretching temperature is more than the crystal dispersion temperature +40°C, the microporous membrane has low permeability and compression resistance, and large unevenness of properties (particularly air permeability) in a sheet-width direction when stretched in TD. When the second stretching temperature is lower than the crystal dispersion temperature, the PO is so insufficiently softened that it is likely broken by stretching, failing to achieve even stretching. When the PO is composed of PE, the stretching temperature is generally 90 to 140°C, preferably 100 to 135°C.

The diameters of pores obtained by the first stretching and the removal of a solvent are made larger by the above second stretching after the removal of a solvent, resulting in a small labyrinth coefficient and improved compression resistance. As a result, the microporous membrane is provided with high permeability and compression resistance. Because the pore diameter can be controlled by the second stretching magnification, the pore diameter may be adjusted depending on the use of the microporous membrane.

Though not restricted, it is preferable to use an inline method in which the first stretching step, the step of removing a membrane-forming solvent, the drying step and the second stretching step are continuously conducted in one line. However, an offline method in which the dried membrane is once wound and then unwound to conduct the second stretching may be used, if necessary.

### (7) Heat treatment

The second-stretched membrane is preferably heated. The heat treatment stabilizes crystals in the microporous membrane, resulting in even lamellas. The heat treatment may be heat-setting and/or annealing, which are properly selectable depending on the desired properties of the microporous membrane, though the heat-setting is preferable. The heat-setting is conducted by a tenter method, a roll method or a rolling method. The heat-setting is conducted at a temperature equal to or lower than the melting point of PO forming the microporous PO membrane +30°C, preferably at a temperature ranging from the crystal dispersion temperature to the melting point.

The annealing is conducted by a tenter method, a roll method, a rolling method, a belt conveyor method or a floating method. The annealing is conducted at a temperature equal to or lower than the melting point of the microporous PO membrane, preferably at a temperature ranging from 60°C to the melting point -10°C. The shrinkage of the membrane by annealing is suppressed such that the length of the annealed membrane in the second stretching direction is preferably 91% or more, more preferably 95% or more, of the length before the second stretching. Such annealing provides well-balanced strength and permeability to the membrane. The shrinkage to less than 91% deteriorates the balance of properties, particularly permeability, in the width direction after the second stretching. The heating treatment may be a combination of many heat-setting steps and many annealing steps.

### (8) Cross-linking of membrane

The second-stretched microporous membrane may be cross-linked by ionizing radiation. The ionizing radiation rays may be α-rays, β-rays, γ-rays, electron beams, etc. The cross-linking by ionizing radiation may be conducted with electron beams of 0.1 to 100 Mrad and at accelerating voltage of 100 to 300 kV. The cross-linking treatment can elevate the meltdown temperature of the membrane.

### (9) Hydrophilizing

The second-stretched microporous membrane may be hydrophilized. The hydrophilizing treatment may be a monomer-grafting treatment, a surfactant treatment, a corona-discharging treatment, a plasma treatment, etc. The monomer-grafting treatment is preferable conducted after ionizing radiation.

The surfactants may be any of nonionic surfactants, cationic surfactants, anionic surfactants and amphoteric surfactants, though the nonionic surfactants are preferable. The microporous membrane is hydrophilized by dipped in a solution of the surfactant in water or a lower alcohol such as methanol, ethanol, isopropyl alcohol, etc., or by coated with the solution by a doctor blade method.

The hydrophilized microporous membrane is dried. To provide the microporous PO membrane with improved permeability, it is preferable to conduct heat treatment at a temperature equal to or lower than the melting point of the polyolefin microporous membrane while preventing its shrinkage during drying. For such shrinkage-free heat treatment, for instance, the above-described heat treatment method may be conducted on the hydrophilized microporous membrane.

### (10) Coating

The second-stretched microporous membrane may be coated with PP; a porous body of fluororesins such as polyvinylidene fluoride, polytetrafluoroethylene, etc.; a porous body of polyimide, polyphenylene sulfide, etc., to have high meltdown properties when used as battery separators. The coating PP preferably has Mw in a range from 5,000 to 500,000 and solubility of 0.5 g or more per 100 g of toluene at 25°C. This PP preferably has a racemic diad fraction of 0.12 to 0.88. The racemic diad means a pair of polymer-constituting units enantiomeric to each other.

### (B) Second production method

The second method for producing a microporous PO membrane comprises the same steps as in the first production method, except that the first stretching temperature may be in a range from the crystal dispersion temperature to the melting point +10°C, and that the first-stretched membrane is brought into contact with a hot solvent before and/or after removing the membrane-forming solvent. Thus, only the first stretching step and the hot solvent treatment step will be explained below.

### (1) First stretching

The first stretching temperature in the second production method may be in a range from the crystal dispersion temperature of PO to the melting point +10°C, preferably from the crystal dispersion temperature to the crystal dispersion temperature +40°C, more preferably from the crystal dispersion temperature +5°C to the crystal dispersion temperature +35°C, most preferably from the crystal dispersion temperature +10°C to the crystal dispersion temperature +30°C. When the PO is composed of PE, the stretching temperature is generally 90 to 130°C, preferably 100 to 125°C, more preferably 110 to 123°C. The first stretching may be conducted by a tenter method, etc., as in the first method. The stretching magnification may also be the same as in the first method.

### (2) Hot solvent treatment

In the second production method, the first-stretched membrane is brought into contact with a hot solvent before and/or after removing the membrane-forming solvent. The hot solvent treatment is preferably conducted before removing the membrane-forming solvent. The hot solvent is preferably the above-mentioned liquid membrane-forming solvent, and particularly liquid paraffin. The hot solvent may be the same as or different from that used for preparing the PO solution.

Though not particularly restricted as long as the membrane subjected to the first stretching (first-stretched membrane) can be brought into contact with a hot solvent, the hot solvent treatment is conducted by, for instance, a method of bringing the first-stretched membrane directly into contact with the hot solvent (simply called "direct method" unless otherwise mentioned), a method of bringing the first-stretched membrane into contact with a cool solvent and then heating it (simply called "indirect method" unless otherwise mentioned), etc. Usable as the direct method is a method of immersing the first-stretched membrane into the hot solvent, a method of spraying the hot solvent to the molding, a method of coating the molding with the hot solvent, etc., though the immersion method is preferable for uniform treatment. Usable as the indirect method is a method of bringing the molding into contact with a heating roll, heating it in an oven or immersing it into a hot solvent, after immersing it into a cool solvent, spraying it with a cool solvent or coating it with a cool solvent.

The pore diameter and porosity of the membrane can be changed by changing the temperature and treatment time in the hot solvent treatment step. The hot solvent temperature is preferably in a range from the crystal dispersion temperature of PO to the melting point of PO +10°C. When the PO is composed of PE, the hot solvent temperature is preferably 110 to 130°C, more preferably 115 to 130°C. The contact time is preferably 0.1 seconds to 10 minutes, more preferably 1 second to 1 minute. When the hot solvent temperature is lower than the crystal dispersion temperature, or when the contact time is less than 0.1 seconds, the hot solvent treatment has little effect, resulting in insufficiently improved permeability. When the hot solvent temperature is higher than the melting point +10°C, or when the contact time is more than 10 minutes, the microporous membrane undesirably has poor strength and large likelihood of rupture.

After the hot solvent treatment, the membrane is washed to remove the remaining hot solvent. Because the washing method may be the same as the above-mentioned method of removing the membrane-forming solvent, the explanation will be omitted. Needless to say, when the hot solvent treatment is conducted before removing the membrane-forming solvent, the hot solvent can be removed by conducting the above-mentioned removal of the membrane-forming solvent.

The above-mentioned hot solvent treatment provides fibrils formed by the first stretching with leaf-vein-like structures, and makes fiber trunks of fibrils relatively thick. Therefore, the microporous membrane is provided with a large pore diameter and excellent strength and permeability. The above-mentioned hot solvent treatment is not restricted to the second production method, but also it may be conducted in the first production method. That is, the first-stretched membrane may be brought into contact with a hot solvent before and/or after removing the membrane-forming solvent, in the first production method.

### [3] Microporous polyolefin membrane

The microporous membrane according to a preferred embodiment of the present invention has the following properties.
(1) It has air permeability (Gurley value) of 15 to 400 seconds/100 cm³ (converted to the value at 20-µm thickness). When the microporous membrane is used as battery separators, the air permeability is preferably 30 to 400 seconds/100 cm³/20 µm. The air permeability of battery separators in this range provides batteries with large capacity and good cyclability. The air permeability of less than 30 seconds/100 cm³/20 µm might not cause shutdown sufficiently during temperature elevation in batteries. When the microporous membrane is used for a filter, the air permeability is 15 to 200 seconds/100 cm³/20 µm. As described above, the air permeability can be controlled by selecting the second stretching magnification.
(2) It has porosity of 25 to 80%. When the porosity is less than 25%, excellent air permeability is not obtained. When the porosity exceeds 80%, battery separators formed by the microporous membrane have insufficient strength, resulting in large likelihood of short-circuiting of electrodes.
(3) it generally has an average pore diameter of 0.01 to 1.0 µm. When the microporous membrane is used for battery separators, the average pore diameter is more preferably 0.03 µm or more, most preferably 0.05 µm or more. When the average pore diameter is 0.03 µm or more, the microporous membrane is provided with higher permeability, resulting in excellent osmosis of the electrolysis solution. The average pore diameter of the separator is not particularly restricted. However, when the average pore diameter exceeds 10 µm, the growth of dendrites cannot be suppressed, resulting in large likelihood of the short-circuiting of electrodes. When the microporous membrane is used for a filter, the average pore diameter is preferably 0.01 to 0.1 µm. As above described, the average pore diameter of the microporous membrane can be controlled by selecting the second stretching magnification.
(4) It has a labyrinth coefficient of 12 x 10⁹ or less. The labyrinth coefficient is represented by the following formula: (labyrinth coefficient) = [air permeability (sec/100 cm³/20 µm)/4.22] x porosity (%) x average pore diameter (nm) x [membrane thickness (cm) x 5.18 x 10⁻³]⁻¹. The labyrinth coefficient of 12 x 10⁹ or less provides the membrane with higher permeability and excellent osmosis of an electrolytic solution.
(5) It has pin puncture strength of 1,500 mN/20 µm or more. When the pin puncture strength is less than 1,500 mN/20 µm, short-circuiting is likely to occur in batteries with separators formed by the microporous membrane.
(6) It has tensile rupture strength of 20,000 kPa or more in both MD and TD, so that it is unlikely to be broken.
(7) It has tensile rupture elongation of 100% or more in both MD and TD, so that it is unlikely to be broken.
(8) It has a heat shrinkage ratio of 30% or less in both MD and TD after exposed to 105°C for 8 hours. When the heat shrinkage ratio exceeds 30%, heat generated in lithium batteries with separators formed by the microporous membrane causes the shrinkage of the separator edges, making it highly likely that short-circuiting of electrodes occurs.
(9) It has a thickness change ratio of 15% or more after heat compression at 90°C and 2.2 MPa (22 kgf/cm²) for 5 minutes. When the thickness change ratio is 15% or more, batteries with separators formed by the microporous membrane have good absorbability of electrode expansion, large capacity and good cyclability. The thickness change ratio is preferably 20% or more.
(10) It has post-heat-compression air permeability (converted to the value at 20-µm thickness) of 600 seconds/100 cm³ or less. The post-heat-compression air permeability is air permeability (Gurley value) after heat compression under the above-mentioned conditions. Batteries with separators formed by the microporous membrane having post-heat-compression air permeability of 600 seconds/100 cm³/20 µm or less have large capacity and good cyclability. The post-heat-compression air permeability is preferably 500 seconds/100 cm³/20 µm or less.

As described above, the microporous membrane obtained by the method of the present invention has a large pore diameter and excellent air permeability, mechanical strength and compression resistance, mechanical strength and compression resistance, so that it is suitable for battery separators, filters, etc. Though properly selectable depending on its use, the thickness of the microporous membrane is preferably 5 to 35 µm for battery separators, and 20 to 60 µm for filters.

The present invention will be explained in more detail referring to Examples below without intention of restricting the scope of the present invention.

### Example 1

100 parts by mass of PE composition having Mw/Mn of 16, a melting point of 135°C and the crystal dispersion temperature of 100°C, which comprised 20% by mass of UHMWPE having Mw of 2.0 x 10⁶ and Mw/Mn of 8 and 80% by mass of HDPE having Mw of 3.5 x 10⁵ and Mw/Mn of 13.5, was mixed with 0.375 parts by mass of tetrakis [methylene-3-(3,5-ditertiary-butyl-4-hydroxyphenyl)-propionate] methane as an antioxidant. 25 parts by mass of the PE composition was charged into a strong-blending double-screw extruder having an inner diameter of 58 mm and L/D of 42, and 75 parts by mass of liquid paraffin was supplied to the double-screw extruder via a side feeder. Melt-blending was conducted at 210°C and 200 rpm to prepare a PE solution in the extruder. The PE solution was then extruded from a T-die mounted to a tip end of the extruder to form a sheet having a thickness of 1.7 mm, which was pulled by cooling rolls controlled at 40°C to form a gel molding. The gel molding was simultaneously biaxially stretched to 5 x 5 folds by a tenter-stretching machine at 119.5°C (first stretching). The stretched membrane was fixed to an aluminum frame of 20 cm x 20 cm, and immersed in a bath of methylene chloride controlled at 25°C for washing with vibration of 100 rpm for 3 minutes. The washed membrane was air-dried at room temperature. The dried membrane was preheated at 110°C and then re-stretched by a tenter-stretching machine to a magnification of 1.4 folds in TD at a rate of 15%/second at 110°C (second stretching). The re-stretched membrane held by a tenter was heat-set at 110°C for 30 seconds, to produce a microporous PE membrane. The first stretching, the washing, the drying, the second stretching and the heat-setting were continuously conducted in one line.

### Example 2

A microporous PE membrane was produced in the same manner as in Example 1, except that the second stretching magnification was 1.3 folds.

### Example 3

A microporous PE membrane was produced in the same manner as in Example 1, except that the second stretching magnification was 1.2 folds.

### Example 4

A microporous PE membrane was produced in the same manner as in Example 1, except that the second stretching magnification was 1.75 folds.

### Example 5

A microporous PE membrane was produced in the same manner as in Example 1, except that the first stretching temperature was 119.7°C, and that the dried membrane was once wound and then unwound to conduct the second stretching to a magnification of 1.35 folds at 100°C.

### Example 6

A microporous PE membrane was produced in the same manner as in Example 1, except that the first stretching temperature was 119.7°C, and that the second stretching was conducted to a magnification of 1.3 folds in MD at 100°C.

### Example 7

A microporous PE membrane was produced in the same manner as in Example 1, except that the first stretching temperature was 119.7°C, and that the second stretching was conducted to a magnification of 1.6 folds in MD at 100°C.

### Example 8

A microporous PE membrane was produced in the same manner as in Example 1, except that the thickness of the gel molding was 1.3 mm, that the first stretching temperature was 116.5°C, that the second stretching was conducted to a magnification of 1.3 folds in MD at 100°C, and that the heat-setting temperature was 127°C.

### Example 9

A microporous PE membrane was produced in the same manner as in Example 1, except that the thickness of the gel molding was 1.1 mm, that the first stretching temperature was 118°C, and that the second stretching temperature and the heat-setting temperature were 126.8°C.

### Example 10

A microporous PE membrane was produced in the same manner as in Example 1, except that the first stretching temperature was 119°C, and that the second stretching temperature and the heat-setting temperature were 128°C.

### Example 11

As shown in Table 1, a gel molding was formed in the same manner as in Example 1, except that PE having Mw/Mn of 15.7, a melting point of 136°C and a crystal dispersion temperature of 100°C, which comprised 30% by mass of UHMWPE having Mw of 2.0 x 10⁶ and Mw/Mn of 8 and 70% by mass of HDPE having Mw of 3.5 x 10⁵ and Mw/Mn of 13.5, was used as a raw resin, that the PE solution concentration was 30% by mass, and that the thickness was 1.3 mm. The gel molding was simultaneously biaxially stretched to 5 x 5 folds by tenter-stretching machine at 116°C (first stretching). The stretched membrane was fixed to the above-identified frame, immersed in a bath of liquid paraffin controlled at 128°C for 2 seconds, and then immersed in a bath of methylene chloride controlled at 25°C to wash it with vibration of 100 rpm for 3 minutes. The washed membrane was air-dried at room temperature, and re-stretched to a magnification of 1.4 folds in TD at rate of 15%/second by tenter-stretching machine at 125°C (second stretching). The re-stretched membrane held by a tenter was heat-set at 125°C for 30 seconds, to produce a microporous PE membrane. The first stretching, the hot solvent treatment, the washing, the drying, the second stretching and the heat-setting were continuously conducted in one line.

### Comparative Example 1

A microporous PE membrane was produced in the same manner as in Example 1, except that HDPE having Mw of 3.0 x 10⁵ was used, the PE solution concentration was 30% by mass, the thickness of the gel molding was 1.3 mm, that neither the second stretching nor the heated solvent treatment was conducted, and that the heat-setting temperature was 125°C, as shown in Table 1.

### Comparative Example 2

A microporous PE membrane was produced in the same manner as in Example 1, except that HDPE having Mw of 3.0 x 10⁵ was used, that the thickness of the gel molding was 1.3 mm, that the first stretching temperature was 114°C, that the second stretching magnification was 1.3 folds, and that the heat-setting temperature was 125°C.

### Comparative Example 3

A microporous PE membrane was produced in the same manner as in Example 1, except that the second stretching magnification was 1.0 folds.

### Comparative Example 4

A microporous PE membrane was produced in the same manner as in Example 1, except that the PE solution concentration was 30% by mass, and that the second stretching magnification was 3.0 folds.

### Comparative Example 5

A microporous PE membrane was produced in the same manner as in Example 11, except that the second stretching magnification was 1.0 folds.

### Comparative Example 6

A microporous PE membrane was produced in the same manner as in Example 11, except that the second stretching was conducted to a magnification of 3.0 folds in MD.

The properties of the microporous PE membranes of Examples 1 to 11 and Comparative Examples 1 to 3 and 5 were measured by the following methods. The results are shown in Table 1.
(1) Thickness: Measured by a contact thickness meter available from Mitutoyo Corporation.
(2) Air permeability (Gurley value): Measured according to JIS P8117 (converted to the value at 20-µm thickness).
(3) Porosity: Measured by a weight method.
(4) Average pore diameter: diameters of 20 pores were measured by atomic force microscopy (AFM), and averaged to determine the average pore diameter.
(5) Labyrinth coefficient: Calculated by following the formula: [air permeability (sec/100 cm³/20 µm)/4.22] x porosity (%) x average pore diameter (nm) x [membrane thickness (cm) x 5.18 x 10⁻³]⁻¹.
(6) Pin puncture strength: The maximum load was measured when the microporous membrane was pricked with a needle of 1 mm in diameter (0.5 mm R) at a rate of 2 mm/second.
(7) Tensile rupture strength: Measured on a 10-mm-wide rectangular test piece according to ASTM D882.
(8) Tensile rupture elongation: Measured on a 10-mm-wide rectangular test piece according to ASTM D882.
(9) Heat shrinkage ratio: The shrinkage ratios of each microporous membrane in MD and TD were measured three times when exposed to 105°C for 8 hours, and averaged to determine the heat shrinkage.
(10) Compression resistance: The membrane was sandwiched by a pair of press plates having high-flat surfaces, and pressed by a pressing machine at 90°C and 2.2 MPa for 5 minutes, to subject the membrane to even heat compression. The thickness and air permeability (post-heat-compression air permeability) of the heat-compressed membrane were measured by the above-mentioned method. The thickness change ratio was calculated relative to the thickness (100%) of the membrane before heat compression.

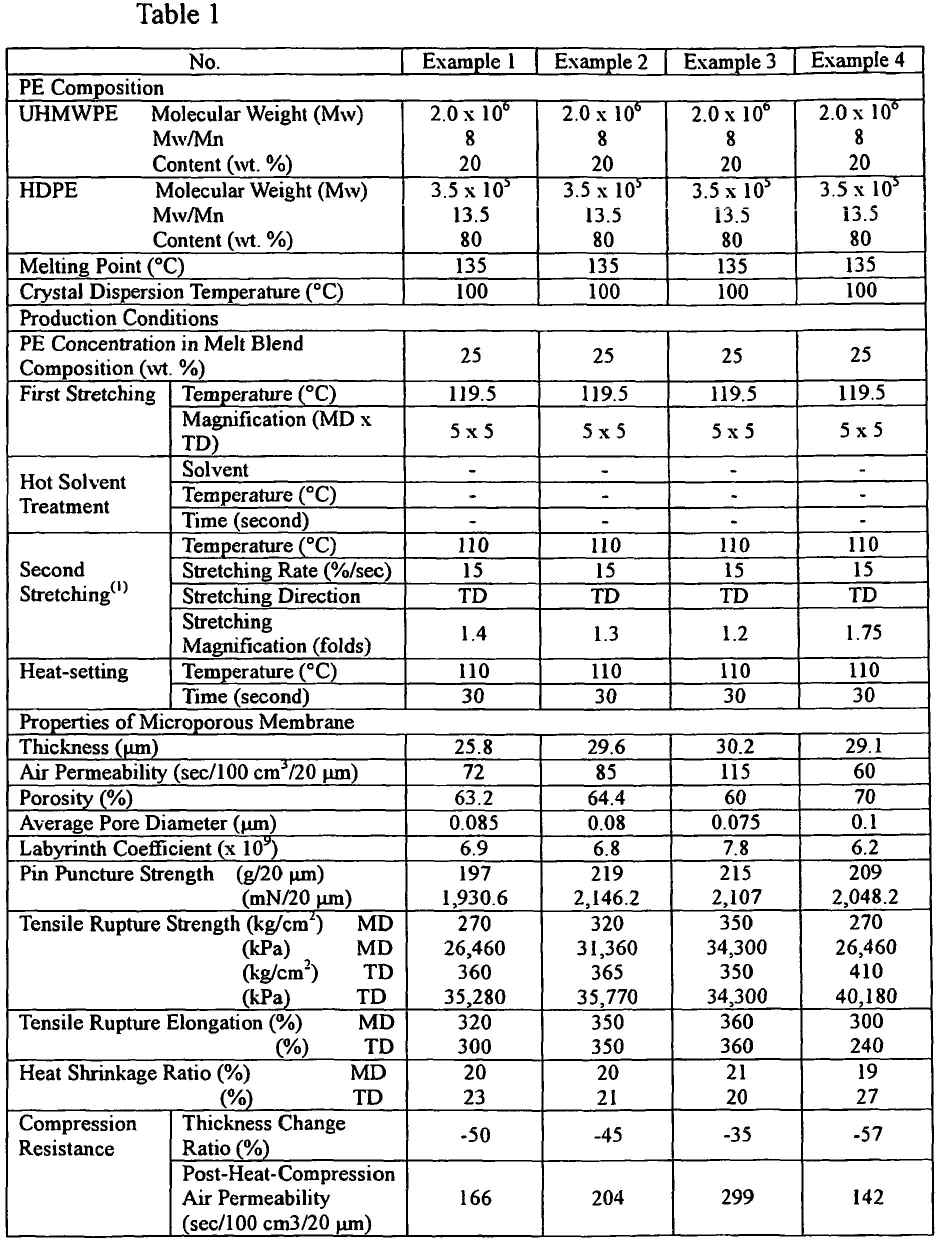

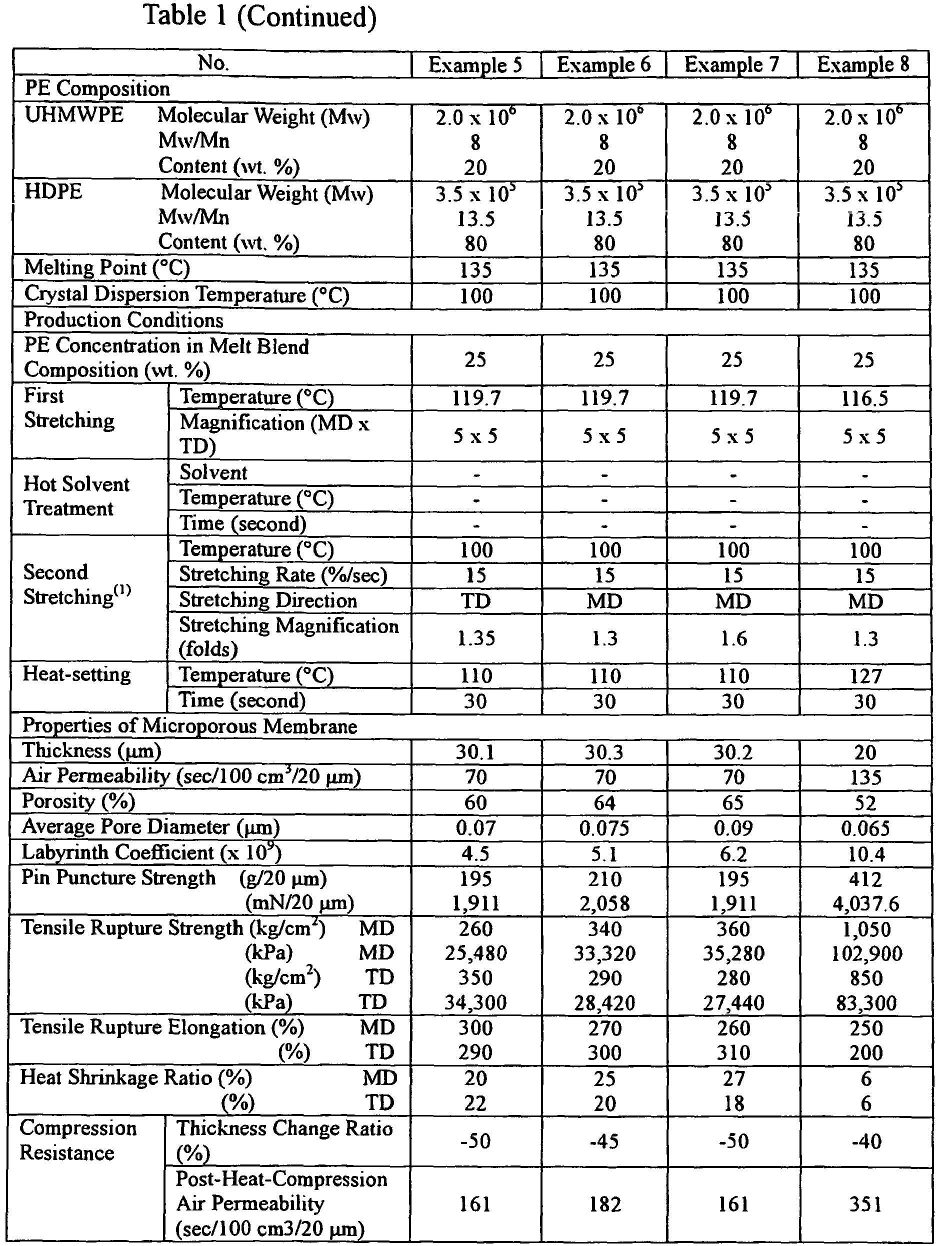

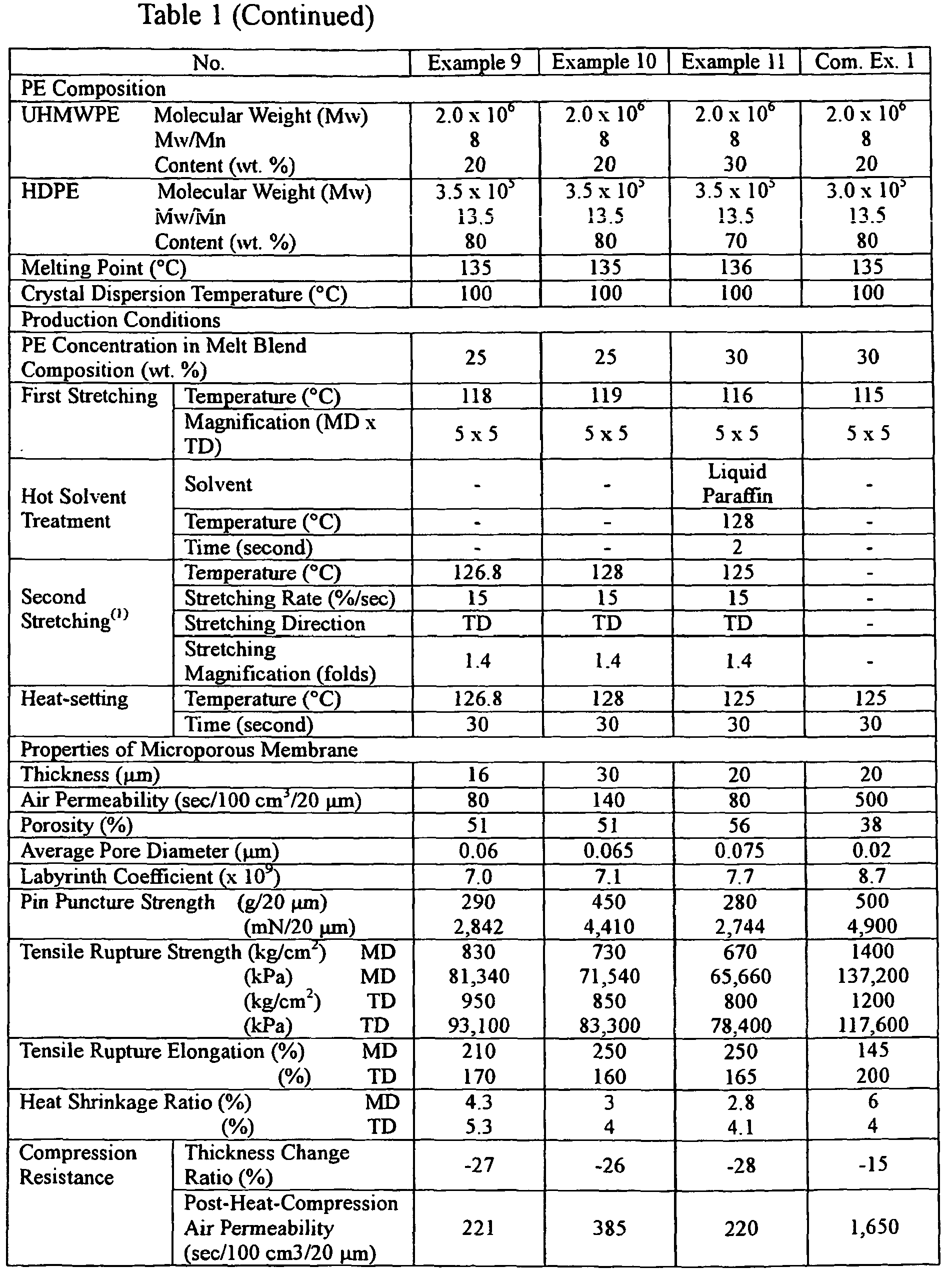

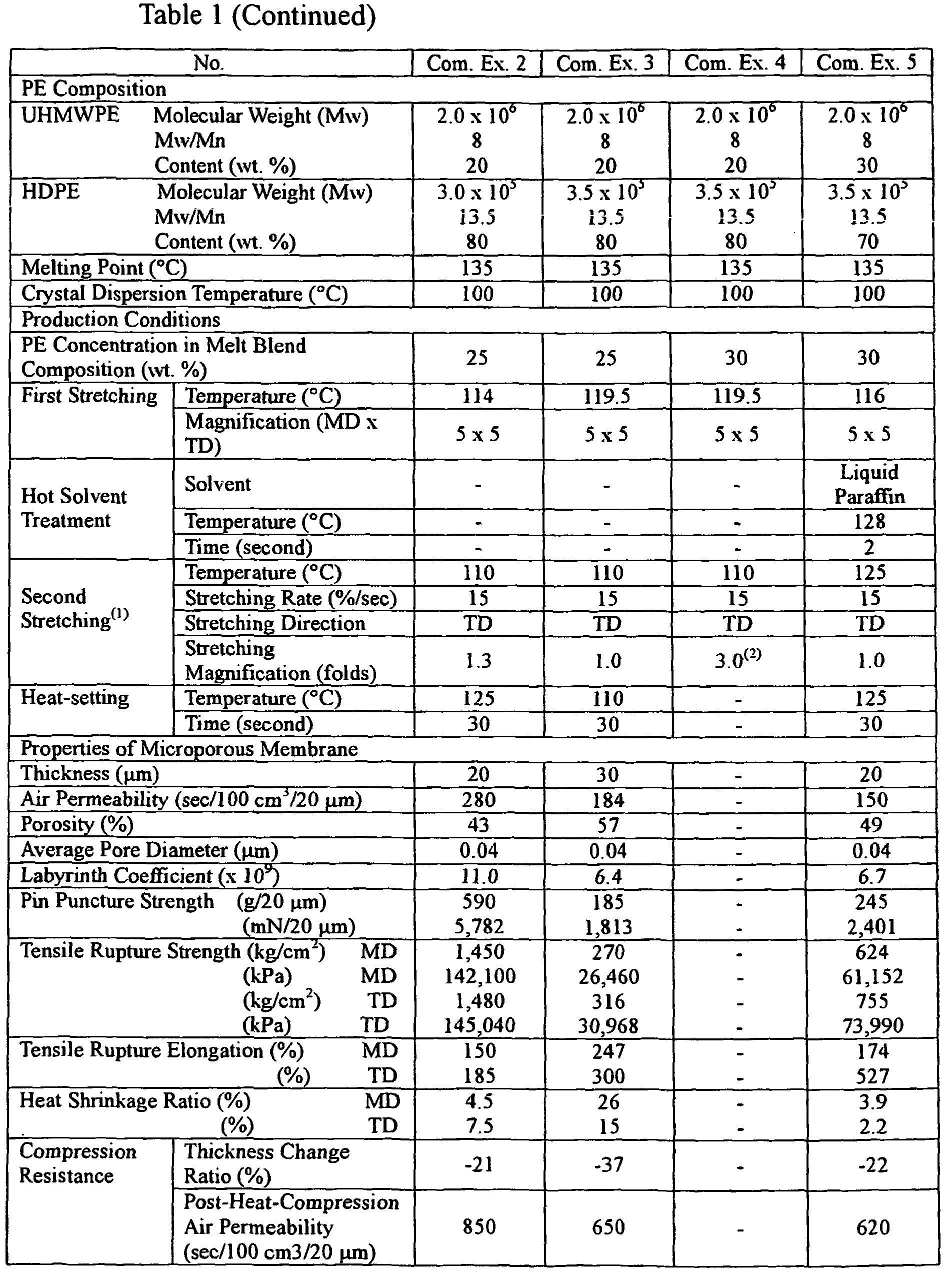

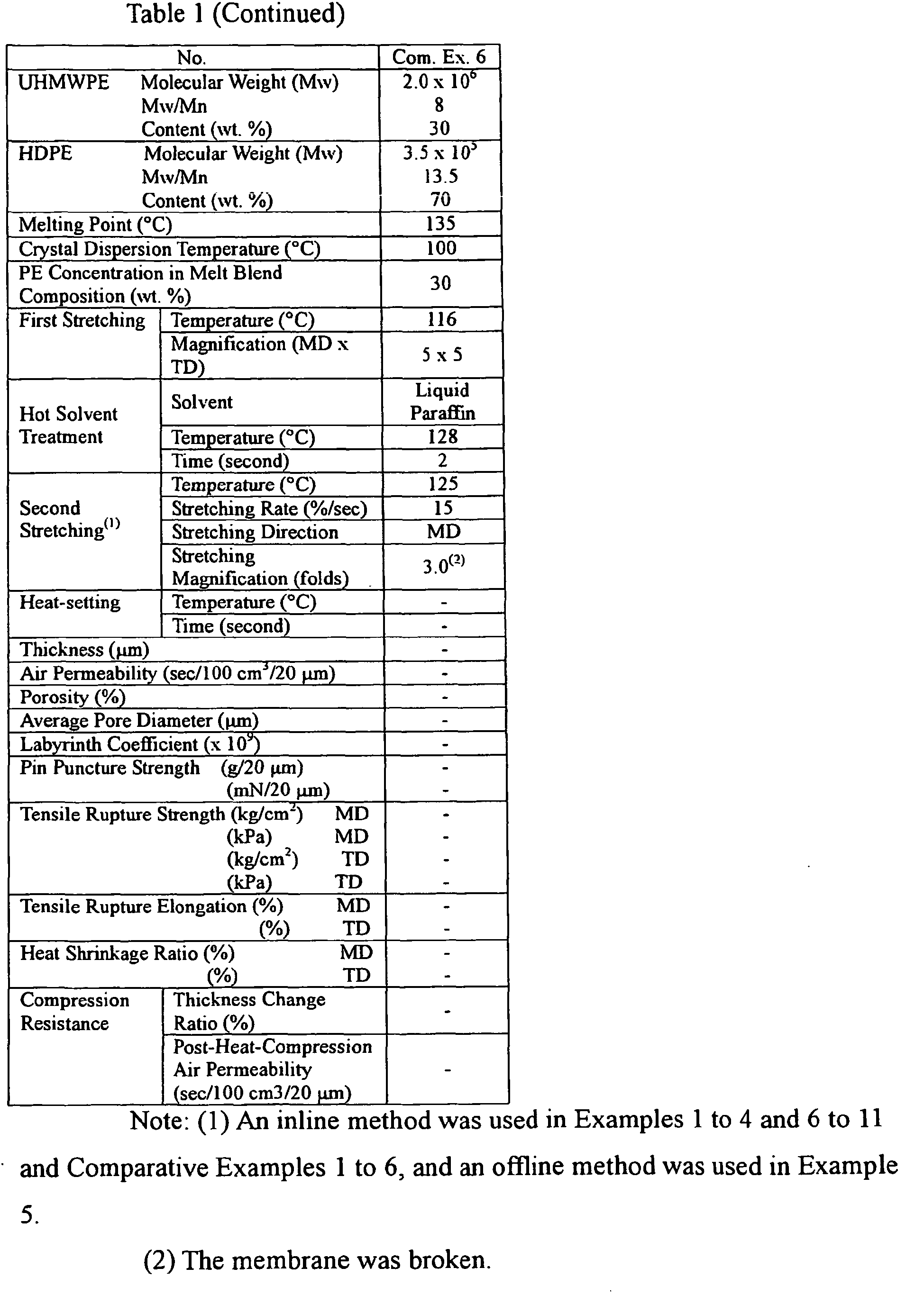

As is clear from Table 1, the microporous membranes of Examples 1 to 11 had well-balanced air permeability, labyrinth coefficient, pin puncture strength, tensile rupture strength, tensile rupture elongation and heat shrinkage resistance, as well as large average pore diameters, large thickness change ratios after heat compression, and small post-heat-compression air permeability after heat compression because the first stretching temperature was in a range from the crystal dispersion temperature of PE +15°C to the crystal dispersion temperature +40°C, and the second stretching magnification was 1.1 to 2.5 fold in Examples 1 to 10, or because the hot solvent treatment was conducted in Example 11. On the other hand, the microporous membrane of Comparative Example 1 had poorer air permeability and porosity, a smaller average pore diameter, a smaller thickness change ratio after heat compression and larger post-heat-compression air permeability than those of Examples 1 to 11, because neither the second stretching nor the heated solvent treatment was conducted after the first stretching. Accordingly, it can be said that the microporous membrane of Comparative Example 1 has poorer permeability and compression resistance than those of Examples 1 to 11. Comparative Example 2 had a smaller average pore diameter, a larger labyrinth coefficient, and larger post-heat-compression air permeability than those of Examples 1 to 11, because the first stretching temperature was lower than the crystal dispersion temperature of PE +15°C. Comparative Examples 3 and 5 had smaller average pore diameters, and larger post-heat-compression air permeability than those of Examples 1 to 11, because the second stretching magnification was less than 1.1 folds. The membranes of Comparative Examples 4 and 6 were broken, because the second stretching magnification exceeded 2.5 folds.

### EFFECT OF THE INVENTION

A microporous polyolefin membrane having a large pore diameter and excellent air permeability, mechanical strength and compression resistance can be produced stably and efficiently by the method of the present invention, because the method comprises (a) the steps of stretching a gel molding having a polyolefin and a membrane-forming solvent at least uniaxially at a temperature ranging from the crystal dispersion temperature of polyolefin +15°C to the crystal dispersion temperature +40°C, removing the membrane-forming solvent, and stretching again to a magnification of 1.1 to 2.5 fold at least uniaxially, or (b) the steps of stretching the gel molding at least uniaxially, bringing the stretched membrane into contact with a hot solvent before and/or after removing the membrane-forming solvent, and stretching again to a magnification of 1.1 to 2.5 fold at least uniaxially. Because the method of the present invention can particularly provide a microporous membrane with large pore diameters and high compression resistance, battery separators formed by the microporous membrane have excellent cyclability and electrolytic solution absorption, resulting in improvement in battery life and productivity. Filters formed by the microporous membranes obtained by the method of the present invention have excellent particle removal performance though no pore-forming additives are used. Because pore diameters can be adjusted by selecting the second stretching magnification in the method of the present invention for producing a microporous membrane, the particle removal performance of filters formed by the microporous membrane can easily be controlled.

## Claims

1. A method for producing a microporous polyolefin membrane comprising the steps of
(1) melt-blending a polyolefin and a membrane-forming solvent,
(2) extruding the resultant melt blend through a die,
(3) cooling the extrudate to form a gel molding,
(4) subjecting the resultant gel molding to a first stretching at least uniaxially,
(5) removing said membrane-forming solvent, and
(6) subjecting the stretched, solvent-removed membrane to a second stretching at least uniaxially,
wherein
the second stretching magnification is 1.1 to 2.5 fold, and
the second stretching temperature is in a range from the crystal dispersion temperature of the polyolefin +25°C to the crystal dispersion temperature +40°C,
**characterized in that** the first stretching temperature is in a range from the crystal dispersion temperature of said polyolefin +15°C to the crystal dispersion temperature + 19°C.

2. The method for producing a microporous polyolefin membrane according to claim 1, wherein the first-stretched membrane is brought into contact with a hot solvent before and/or after removing said membrane-forming solvent.

3. The method for producing a microporous polyolefin membrane according to claim 1 or 2, wherein the membrane is heat-set after the second stretching.

4. A microporous polyolefin membrane produced by the method according to any one of claims 1 to 3, wherein the polyolefin membrane has an air permeability of 30 to 400 seconds/100 cm³/20 µm, a porosity of 25 to 80%, an average pore diameter of 0.01 to 1.0 µm, and a thickness change ratio of 15% or more after heat compression at 2.2 MPa and 90°C for 5 minutes, the air permeability being 600 seconds/100 cm³/20 µm or less after heat compression.

## Patentansprüche

1. Verfahren zum Herstellen einer mikroporösen Polyolefinmembran, in dem
(1) ein Polyolefin und ein membranbildendes Lösungsmittel schmelzgemischt werden,
(2) die erhaltene Schmelzmischung durch ein Formteil extrudiert wird,
(3) das Extrudat gekühlt wird, um ein Gel-Formstück zu bilden,
(4) das erhaltene Gel-Formstück einer ersten wenigstens monoaxialen Dehnung unterzogen wird,
(5) das membranbildende Lösungsmittel entfernt wird, und
(6) die gedehnte, von Lösungsmittel befreite Membran einer zweiten wenigstens monoaxialen Dehnung unterzogen wird,
wobei
die zweite Dehnungsvergrößerung 1,1 bis 2,5-fach ist, und
die zweite Dehnungstemperatur in einem Bereich von der Kristalldispersionstemperatur des Polyolefins +25°C bis zu der Kristalldispersionstemperatur +40°C liegt,
**dadurch gekennzeichnet, dass** die erste Dehnungstemperatur in einem Bereich von der Kristalldispersionstemperatur des Polyolefins +15°C bis zu der Kristalldispersionstemperatur +19°C liegt.

2. Verfahren zum Herstellen einer mikroporösen Polyolefinmembran nach Anspruch 1, wobei die der ersten Dehnung unterzogene Membran vor und/oder nach Entfernung des membranbildenden Lösungsmittels in Kontakt mit einem Warmlösungsmittel gebracht wird.

3. Verfahren zur Herstellung einer mikroporösen Polyolefinmembran nach Anspruch 1 oder 2, wobei die Membran nach der zweiten Dehnung thermo-fixiert wird.

4. Mikroporöse Polyolefinmembran, die durch das Verfahren gemäß einem der Ansprüche 1 bis 3 hergestellt wurde, wobei die Polyolefinmembran eine Luftpermeabilität von 30 bis 400 Sekunden/100 cm³/20 µm, eine Porosität von 25 bis 80%, einen Durchschnittsporendurchmesser von 0,01 bis 1,0 µm und ein Dickenänderungsverhältnis von mindestens 15% nach einer Wärmekompression bei 2,2 MPa und 90°C für 5 Minuten aufweist, wobei die Luftpermeabilität nach der Wärmekompression höchstens 600 Sekunden/100 cm³/20 µm beträgt.

## Revendications

1. Procédé pour produire une membrane polyoléfine microporeuse, comprenant les étapes consistant à :
(1) mélanger par fusion une polyoléfine et un solvant de formation de membrane,
(2) extruder le mélange de fusion résultant à travers une filière,
(3) refroidir l'extrudat de façon à former un moulage de gel,
(4) soumettre le moulage de gel résultant à un premier étirement, au moins de façon uniaxiale,
(5) retirer ledit solvant de formation de membrane, et
(6) soumettre la membrane étirée dont le solvant a été retiré à un deuxième étirement, au moins de façon uniaxiale,
dans lequel :
le deuxième agrandissement d'étirement est compris entre 1,1 et 2,5 fois, et
la deuxième température d'étirement est située dans une plage comprise entre la température de dispersion cristalline de la polyoléfine +25° C et la température de dispersion cristalline +40° C,
**caractérisé en ce que** la première température d'étirement est située dans une plage comprise entre la température de dispersion cristalline de ladite polyoléfine +15° C et la température de dispersion cristalline +19° C.

2. Procédé pour produire une membrane polyoléfine microporeuse selon la revendication 1, dans lequel la membrane étirée une première fois est amenée en contact avec un solvant chaud avant et/ou après le retrait dudit solvant de formation de membrane.

3. Procédé pour produire une membrane polyoléfine microporeuse selon la revendication 1 ou 2, dans lequel la membrane est thermodurcie après le deuxième étirement.

4. Membrane polyoléfine microporeuse produite par le procédé selon l'une quelconque des revendications 1 à 3, dans laquelle la membrane polyoléfine a une perméabilité à l'air de 30 à 400 secondes/100 cm³/20 µm, une porosité de 25 à 80%, un diamètre de pore moyen de 0,01 à 1,0 µm, et un taux de changement d'épaisseur de 15% ou plus après une compression à la chaleur sous 2,2 MPa et 90° C pendant 5 minutes, la perméabilité à l'air étant de 600 secondes/100 cm³/20 µm ou moins après la compression à la chaleur.
